# EUROPEAN PATENT APPLICATION

(11) **EP 4 040 119 A1**
(43) Date of publication of application: **10.08.2022**
(21) Application number: 21155897.8
(22) Date of filing: 09.02.2021
(51) Int. Cl.: G01H 1/00, G01M 7/00

(54) **ROTOR BLADE MONITORING ARRANGEMENT**

(71) Applicant: Siemens Gamesa Renewable Energy A/S, 7330 Brande (DK)
(72) Inventor: Bernhammer, Lars Oliver, 9400 Nørresundby (DK); Fremmelev, Mads Anker, 9000 Aalborg (DK); Ladpli, Purim, 9530 Støvring (DK); Orlowitz, Esben, 7200 Grindsted (DK)
(74) Representative: Aspacher, Karl-Georg

(57) **Abstract**

The invention describes a wind turbine rotor blade monitoring arrangement (1) comprising an electrodynamic exciter (10) mounted on the rotor blade (20); an excitation unit (11) configured to generate an excitation signal (110) for the electrodynamic exciter (10); a force sensor (10F) configured to measure force (100) imparted to the rotor blade (20) during operation of the electrodynamic exciter (10), which force sensor (10F) is collocated with the electrodynamic exciter (10); a vibration sensor (12) arranged on the rotor blade (20) at a distance from the electrodynamic exciter (10); and an evaluation unit (13) configured to infer a health status of the rotor blade (20) on the basis of a vibration sensor output (120) and the measured force (100). The invention further describes a method of monitoring the health status of a wind turbine rotor blade (20).

## Description

The invention describes a monitoring arrangement of a wind turbine rotor blade, and a method of monitoring the health status of a wind turbine rotor blade.

### Background

A wind turbine rotor blade may be subject to extreme weather conditions during its lifetime, as well as extreme wind loading. Damage to a rotor blade during its lifetime is unavoidable, but it is important to be able to assess the extent of damage in order to avoid failure of the rotor blade, since this is generally associated with downtime, loss of earnings, and expensive repair procedures.

Therefore, it is usual to perform some kind of structural health monitoring (SHM) in order to assess the level of damage to a rotor blade at any point during its lifetime. In one approach, damage assessment is done at low-frequency excitation, in the natural frequency range of the rotor blade. For example, a passive SHM system may be configured to passively "listen" to the natural frequency vibration of a rotor blade during operation of the wind turbine, e.g. when subject to wind loading, during turbulence, etc. However, such low frequencies of vibration are relatively insensitive to structural damage. The information which can be obtained from this approach is limited, because it is only possible to infer the presence of relatively large defects from excitation at such low frequencies. Generally, the excitation frequency is inversely proportional to the magnitude of damage that can be detected.

In an alternative approach, it is known to deploy an actuator or exciter such as an impact hammer or electrodynamic plunger in order to transmit force into the rotor blade by impact. However, this approach applies blunt force to the rotor blade, which may result in structural damage or unwarranted structural deterioration. While this approach results in a wider range of frequencies propagating through the rotor blade body, it is not possible to determine the frequency content of this form of excitation with any degree of precision, so that evaluation of any measured sensor data is correspondingly imprecise. It is known to deploy piezoelectric stack actuators to impart energy into the rotor blade during an SHM procedure, however such devices can only generate a relatively weak force, so that a great number of such devices would be required to assess the structural health of a long rotor blade.

It is therefore an object of the invention to provide a way of assessing the structural integrity of a rotor blade to overcome the problems outlined above.

This object is achieved by the rotor blade monitoring arrangement of claim 1; and by the method of claim 12 of monitoring the health status of a wind turbine rotor blade.

### Description

According to the invention, the wind turbine rotor blade monitoring arrangement comprises an electrodynamic exciter (or "electrodynamic shaker") arranged on a surface of the rotor blade; an excitation unit configured to operate the electrodynamic exciter; a force sensor configured to measure the forces imparted to the rotor blade during operation of the electrodynamic exciter, which force sensor is collocated with the electrodynamic exciter. The monitoring arrangement further comprises a vibration sensor arranged in or on the rotor blade at a distance from the electrodynamic exciter; and an evaluation unit configured to infer a health status of the rotor blade on the basis of a vibration sensor output and the measured imparted forces during operation of the electrodynamic exciter.

An electrodynamic shaker is not an impact plunger or hammer, since it does not comprise any moving part that strikes or impacts the rotor blade. Instead, an electrodynamic shaker deploys a powerful oscillating magnetic field to impart vibrations on an object under test. There are various types of electrodynamic shaker, with various modes of connection to the object under test. An inertial shaker is mounted directly to the object under test, whose mass provides the inertia. In the following, it may be assumed that the electrodynamic exciter is an inertial shaker, and the terms "electrodynamic exciter", "electrodynamic actuator", "electrodynamic shaker" and "inertial shaker" may be used interchangeably. An inertial shaker comprises a robust housing, a coil and an electromagnet. The housing of the inertial shaker is firmly secured to the object under test. The shaker can be constructed so that the moving element is the magnet, for example. During operation of this type of inertial shaker, an alternating current is applied to the coil, which in turn generates a powerful alternating axial force, thereby displacing the magnet. When such an inertial shaker is attached to an object under test, the force exerted by the oscillating magnet is transferred to the object under test. The frequency and magnitude of the excitation current determines the frequency and magnitude of the "output signal", i.e. the force applied to object under test, in this case to the rotor blade body.

An electrodynamic exciter can be controlled by setting its input voltage, choosing a suitable frequency spectrum and associated magnitude. However, the dynamics of the inertial shaker may attenuate components of the frequency spectrum to different extents. Furthermore, any physical connection between the shaker and the rotor blade also has the effect of attenuating components of the frequency spectrum. This means that the magnitude and spectrum of the forces actually imparted to the rotor blade may be significantly different from the well-defined input, so that it is difficult to extract meaningful information from any sensed signal. The advantage of the inventive approach is that the magnitude and spectrum of the forces that are actually being applied to the rotor blade can be determined with a high degree of accuracy by the collocated force sensor, and as a result, any sensed signal can be evaluated in terms of the actually imparted forces, leading to more meaningful and useful results.

It shall be understood that the output of the force sensor is a representation of the "input signal" generated by the electrodynamic exciter, i.e. a representation of the force transmitted into the rotor blade body. The term "collocated" as used to describe the position of the force sensor shall be understood to mean that the force sensor is placed to essentially directly measure the force generated by the inertial shaker. The collocated force sensor may output an electrical signal with an amplitude and frequency spectrum that may be regarded as an "image" of the input signal applied to the rotor blade body. A frequency-domain analysis can yield information regarding the power spectrum of the force being applied to the rotor blade. In a preferred embodiment of the invention, the excitation signal can be adjusted on the basis of this feedback, i.e. on the basis of the actually measured forces being imparted to the rotor blade body. In a preferred embodiment of the invention, the force sensor is placed at a point along a major axis of the inertial shaker, for example the force sensor can be along the longitudinal axis of symmetry of a coil and magnet arrangement of the electrodynamic exciter.

While it might be possible to estimate the applied forces by using an accelerometer near the inertial shaker, the accuracy of such a sensor may be significantly compromised by any structural damage - even minor damage - between the mounting region of the inertial shaker and the position of the accelerometer, an aspect which would become more relevant as the rotor blade ages. The invention avoids such inaccuracies by collocating the force sensor with the inertial shaker.

An advantage of the inventive monitoring arrangement is that it is possible to configure the inertial shaker's output signal - i.e. the force being applied to the rotor blade - using feedback from the force sensor, so that the frequency spectrum of the electrodynamic exciter can be adjusted as necessary. In this way, the electrodynamic exciter can be operated to generate an excitation signal - i.e. vibration or oscillation - that is optimized for damage detection in the rotor blade. The oscillation of the electrodynamic exciter may be adjusted as required to cover a favourably wide band of frequencies, so that a wider range of faults can be detected from analysis of vibration sensor output. The inventive monitoring arrangement is therefore able to detect smaller faults such as minor cracks and fissures, allowing a more comprehensive assessment of the health status of the rotor blade.

The invention also describes a wind turbine with a number of rotor blades (usually three) mounted to a hub; and an instance of such a monitoring arrangement for at least one of the rotor blades. Such a rotor blade may have any number of a vibration sensors arranged at a distance from the inertial shaker. A vibration sensor may be an accelerometer or any other suitable sensor attached to the (interior) surface of the rotor blade, or embedded at least partially in the body of the rotor blade. A vibration sensor may be referred to in the following as a "far-field sensor", and may be assumed to generate an output signal in response to a sensed vibration. The output signal may be voltage, for example. Alternatively, an optical accelerometer may be deployed to sense the vibrations caused by the inertial shaker. A vibration sensor can be a dedicated sensor used only to detect vibrations from the inertial shaker, or it may be a sensor that is incorporated in the rotor blade for other sensing purposes.

According to the invention, the method of monitoring the health status of a wind turbine rotor blade comprises the steps of arranging an electrodynamic exciter on a surface of the rotor blade; collocating a force sensor with the electrodynamic exciter to directly measure the force applied to the rotor blade; arranging a vibration sensor on the rotor blade at a distance from the electrodynamic exciter; operating the electrodynamic exciter and using the collocated force sensor to measure the forces imparted to the rotor blade during operation of the electrodynamic exciter; and inferring a health status of the rotor blade on the basis of a vibration sensor output and the measured forces during operation of the exciter.

The inventive method can be applied at regular intervals so that a favourably accurate assessment of the rotor blade health can be made over its lifetime. With a sufficient number of vibration sensors distributed over the rotor blade, it may be possible to identify with some accuracy the location of a fault such as a crack or delamination, allowing inspection and repair routines to be scheduled more efficiently. Furthermore, using the information collected from the inventive method, it is possible to control the wind turbine under consideration of the health status of the rotor blades. For example, if it has been established from the inventive method that one or more rotor blades has accrued significant damage, with correspondingly decreased load-bearing capacity, the pitch systems may be controlled to avoid high wind loading on the rotor blades. Equally, as long as the rotor blades of a wind turbine are considered "healthy", the power output capacity of the wind turbine can be exploited to the full.

Particularly advantageous embodiments and features of the invention are given by the dependent claims, as revealed in the following description. Features of different claim categories may be combined as appropriate to give further embodiments not described herein.

The evaluation unit can be realised locally, for example an evaluation unit might be installed in the hub. Of course, a local evaluation unit might be arranged elsewhere in the wind turbine, for example as part of a wind turbine control assembly. An evaluation unit can be configured to receive data from the vibration sensor(s) of a single rotor blade, or from the vibration sensor(s) of all rotor blades. In a further preferred embodiment of the invention, the evaluation unit may be realised at a remote location, for example as part of a wind park control configuration. Such an evaluation unit might be configured to receive far-field sensor data from any rotor blade equipped with an electrodynamic exciter of the inventive monitoring arrangement. To communicate with a remote evaluation unit, the wind turbine can be equipped with a suitable means of transmitting far-field sensor output to the remote evaluation unit.

The electrodynamic exciter can be mounted to the rotor blade at any suitable position. For example, the electrodynamic exciter may be attached to the interior surface at the root end, the transition or shoulder region. The inertial shaker can be bolted to the rotor blade laminate. However, fasteners such as bolts may result in an undesirable stress concentration. Preferably, therefore, the electrodynamic exciter is attached to the surface of the rotor blade by an adhesive bond. The adhesive or cement used to attach the electrodynamic exciter is preferably essentially non-compressible after curing, so that it does not significantly damp the vibrations being transferred to the rotor blade body. For example, a suitable cyanoacrylate single-component adhesive may be used.

The force sensor can be embedded in such an adhesive bond. Alternatively, the force sensor may be incorporated in the electrodynamic exciter itself, for example in the housing of the electrodynamic exciter, or it may be mounted to the inertial shaker by screws or any suitable fasteners. Regardless of the manner in which the force sensor is deployed, it is essentially directly "in the path" of the vibrations imparted onto the rotor blade body.

Any number of vibration sensors may be deployed. For example, an arrangement of 1 vibration sensor per 5 square metres on one or both sides of the rotor blade may suffice to collect enough information to be able to assess the health of the rotor blade. Of course, less vibration sensors may be used in the less relevant regions, i.e. regions that are less susceptible to fatigue damage.

Rotor blades of wind turbines may reach a length in excess of 100 meters, and may have a root end diameter in the order of 3 - 4 meters. To reliably detect the presence of a fault at any position of such a rotor blade, the output force of the electrodynamic exciter is preferably at least 5 N, more preferably at least 20 N.

The lower frequency of a commercially available inertial shaker can be in the region of 10 Hz. As explained above, the size of a detected fault is inversely proportional to the oscillation frequency, so that small faults are more likely to be detected at higher oscillation frequencies. To be able to detect both small and large faults, therefore, the upper frequency of the inertial shaker is preferably at least 1 kHz, more preferably at least 3 kHz.

The health assessment of a rotor blade may be carried out as follows: the electrodynamic exciter is actuated by applying a current to its coil. The frequency of the excitation signal can be gradually adjusted to cover a desired range, depending on the sensitivity of certain damages to certain frequencies or frequency ranges, within the frequency range of the electrodynamic exciter. The collocated force sensor senses the resulting vibrations and the force sensor signal is processed to determine the power spectrum of the "input" vibrations that are imparted to the rotor blade. Meanwhile, far-field signals from a vibration sensor are received and processed to compute a power spectrum for the sensed vibrations. These power spectra are compared to determine the frequency response function (FRF) for that far-field sensor. In order to have a reference against which to judge a far-field FRF obtained during the lifetime of the rotor blade, the inventive method preferably also comprises an initial calibration procedure, which can be performed upon completion of manufacture of the rotor blade, preferably after installation of the new rotor blade to the hub of a wind turbine. The electrodynamic exciter is actuated as described above, and far-field signals from the vibration sensor(s) are received and processed. The difference between the input power spectrum and the far-field power spectrum of the pristine blade can be used as a reference.

The inventive method may also be used to compare the FRFs of all rotor blades of a wind turbine. Since the rotor blades of a wind turbine are usually all the same age, any alteration in the FRF of one rotor blade compared to the others may indicate damage in that rotor blade.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a rotor blade equipped with an embodiment of the inventive monitoring arrangement;
Figures 2 - 4 illustrate stages in the inventive method;
Figure 5 shows exemplary FRFs for a far-field sensor of the inventive monitoring arrangement;
Figure 6 shows exemplary SHM reports for a rotor blade monitored by the inventive method;
Figure 7 shows, in cross-section, an electrodynamic exciter 10 mounted to a rotor blade

In the diagrams, like numbers refer to like objects throughout. Objects in the diagrams are not necessarily drawn to scale.

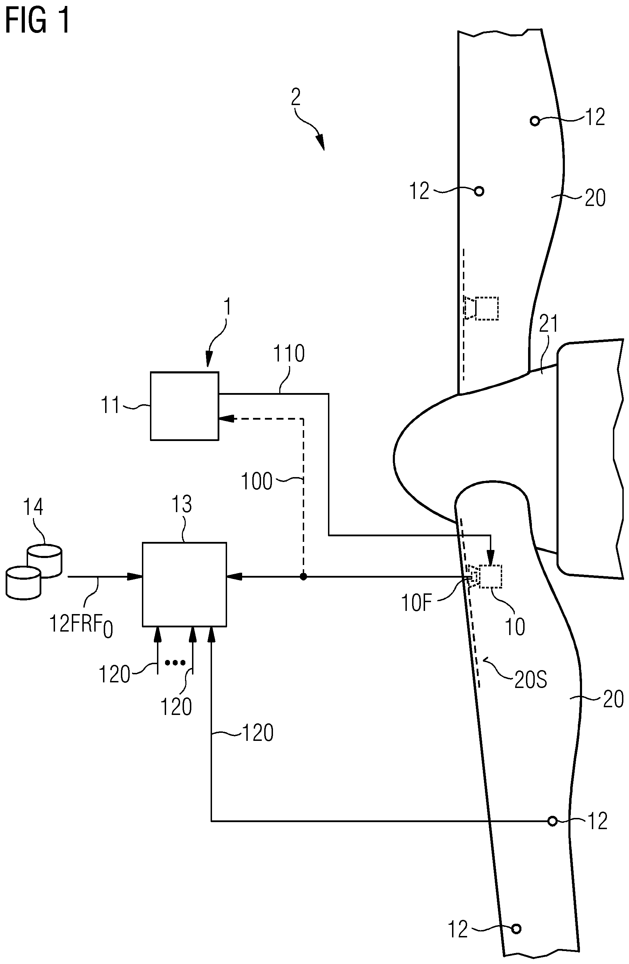

Figure 1 is a schematic representation of a wind turbine 2 (only the relevant aspects are shown) with a rotor blade 20 equipped with an embodiment of the inventive monitoring arrangement 1 for performing SHM on the rotor blade 20. The diagram indicates an electrodynamic exciter 10 or inertial shaker 10 mounted to an interior surface 20S of the rotor blade 20. The inertial shaker 10 is driven from an excitation module 11. A collocated force sensor 10F provides feedback 100 during operation of the electrodynamic exciter 10. A number of far-field vibration sensors 12 are distributed about the rotor blade 20, and their sensed signals 120 are received by an evaluation unit 13. In this exemplary embodiment, the evaluation unit 13 is configured to process the signals 120 received from the vibration sensors 12, as well as the feedback 100 from the collocated force sensor 10F, i.e. a signal 100 representing the measured forces actually being imparted on the rotor blade when the inertial shaker 10 is being operated. As indicated here, the excitation module 11 may also receive feedback 100 from the collocated force sensor 10F during operation of the electrodynamic exciter 10, and the excitation signal 110 may be adjusted accordingly. For example, the frequency spectrum of the excitation signal 110 may be adjusted to compensate for excessive attenuation of certain frequency components observed in the measured feedback 100.

The evaluation unit 13 is configured to process these inputs and to compare relevant parameters or characteristics. For example, as explained above, a comparison of their FRFs can yield useful information regarding the structural integrity of the rotor blade 20. Data collected during the lifetime of the rotor blade 20 may be compared with reference data 12FRF₀ obtained from a database 14, for example a frequency response function (FRF) for a specific sensor 12 may be compared to its reference FRF 12FRF₀ obtained during a calibration procedure. The modules of the monitoring arrangement 1 can be organized locally, for example the excitation module 11, evaluation unit 13 and database 14 may be located at a suitable region in the wind turbine, such as the interior of the hub 21. Equally, the evaluation unit 13 and database 14 may be realized at a remote location such as a park controller, and the monitoring arrangement 1 may also include a transmitter for sending vibration sensor data 120 to the remote location.

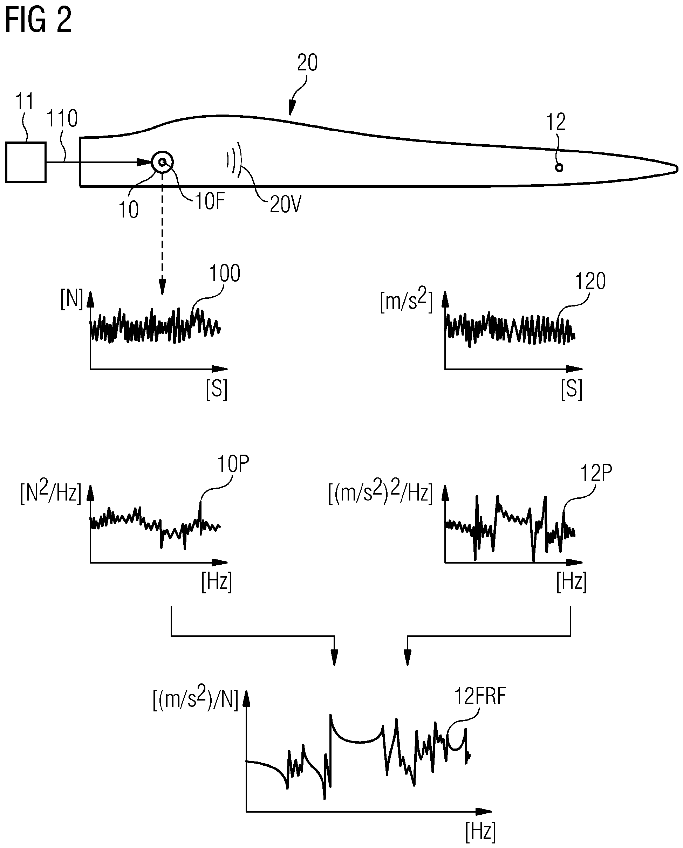

Figure 2 illustrates the inventive method, and shows a rotor blade 20 equipped with an inertial shaker 10 and a far-field sensor 12. Upon excitation by a suitable signal 110, the collocated force sensor 10F senses the force 100 being imparted on the rotor blade 20. The evaluation unit computes the power spectrum 10P of the applied force. A sensor 12 delivers a sensed voltage 120, and the evaluation unit computes the corresponding power spectrum 12P. In a next step, the evaluation unit compares the input power spectrum 10P and the far-field power spectrum 12P to obtain the frequency response function 12FRF for that far-field sensor 12. This can be computed for the rotor blade 20 in its new, "pristine" state and stored as a reference FRF 12FRF₀ for later use. During the lifetime of the rotor blade 20, the gradual deterioration will manifest as alterations in the FRF 12FRF, which can be detected by comparison with the reference FRF 12FRF₀.

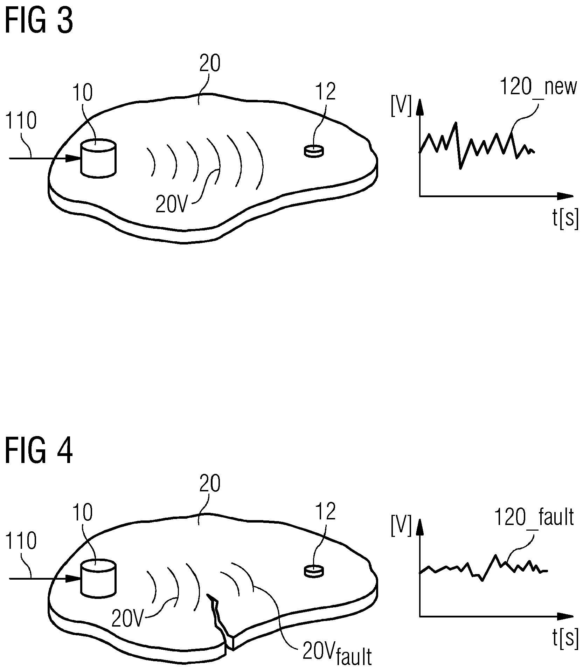

Figure 3 illustrates a stage in the inventive method. Here, the inertial shaker 10 is actuated by an excitation signal 110 from the excitation unit 11 to impart oscillations 20V into the rotor blade 20. Because of the laminar nature of the composite structure of a typical rotor blade, the oscillations 20V are effectively "guided" through one or more layers as they travel through the rotor blade body. The attenuated oscillations are sensed by various vibration sensors 12. An exemplary sensed signal 120 new is shown on the right. In a pristine or healthy state, each vibration sensor 12 receives a specific attenuated version of the actually imparted oscillations 20V. Suitable parameters of this information are used to establish reference data as explained above.

Figure 4 shows a further stage in the inventive method. Here, the electrodynamic exciter 10 is again actuated by the same excitation signal 110 to impart oscillations 20V into the rotor blade 20. However, in this case the rotor blade 20 has sustained damage, shown here as a crack in the laminate structure of the rotor blade body. The distorted oscillations 20_{fault} sensed by one or more of the vibration sensors 12 will differ from the "healthy" version, as indicated in the output signal 120_fault on the right. The extent of the difference can be used to estimate the severity of the damage.

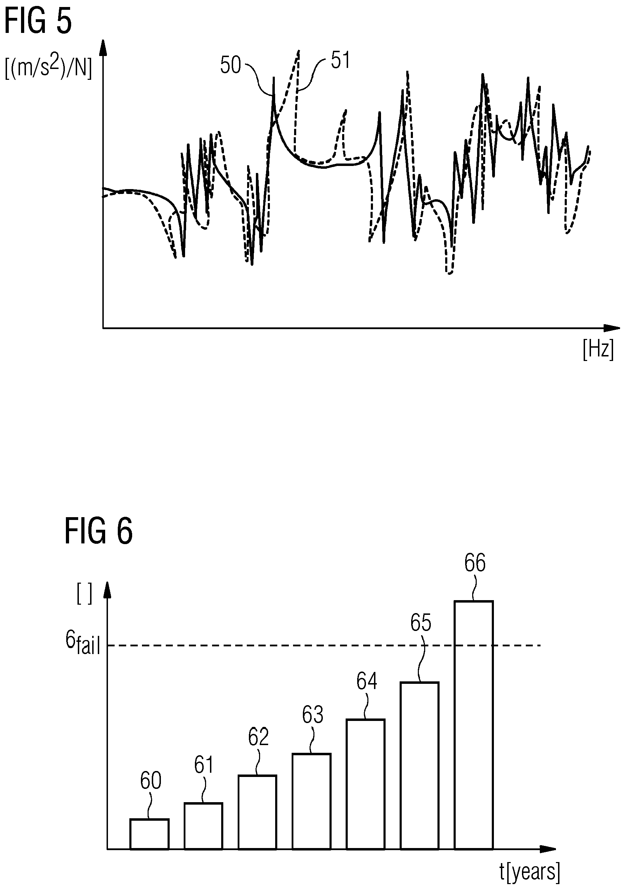

Figure 5 illustrates comparison of a reference FRF 50 of a vibration sensor 12 in a healthy rotor blade, and an FRF 51 obtained for that same vibration sensor 12 at some later stage during the lifetime of the rotor blade. The extent of the difference between the FRFs 50, 51 can be used to quantify the health status of the rotor blade. For example, the later FRF 51 can be subtracted from the reference FRF 50, and the area under the resulting difference curve can be used as a parameter in assessing the health of the rotor blade. Each vibration sensor 12 can contribute such information, and the collective results can be used to arrive at a "health report" for the rotor blade. This can be done at suitable intervals, for example several times a year, once every few years, etc.

Figure 6 indicates how the collected information may be used to track the health status of a rotor blade. The diagram shows a damage index bar chart. In this example, the damage index or "health report" of a rotor blade is determined at regular intervals - for example every two years - to quantitatively assess the severity of degradation/damage, compared to a healthy state 60 at the outset. The collective damage may increase gradually over the years, as indicated by the subsequent values 61 - 66. A damage index 66 exceeding a pre-set threshold 6_{fail} is interpreted to mean that the rotor blade must be repaired or even replaced.

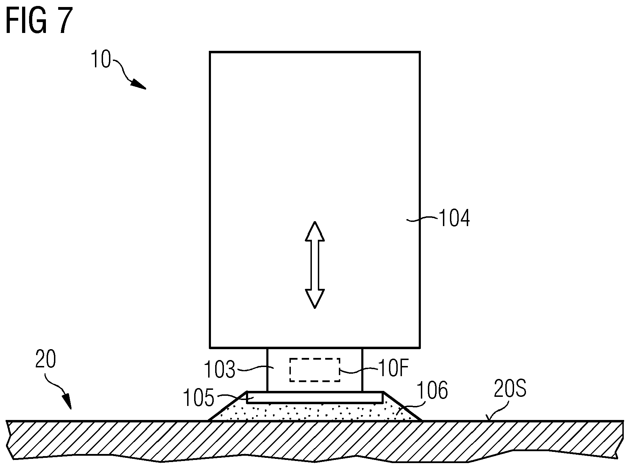

Figure 7 is a simplified schematic of an electrodynamic exciter 10 mounted to a rotor blade 20 of Figure 1. If the inertial shaker 10 is arranged in the interior of an airfoil part of the rotor blade 20, it may be mounted over the shear web of a spar. The electrodynamic exciter 10 comprises a coil and a magnet arranged in a robust housing 104 as will be known to the skilled person. Excitation of the coil 101 results in a strong magnetic field in the direction indicated by the vertical arrow. A force sensor 10F is arranged in an adapter 103 which can be bolted to the housing, for example by a long bolt (not shown) extending from the top of the housing through to its lower face. The force sensor can be placed at any suitable location in the adapter, but is preferably placed close to or on the central vertical axis of the inertial shaker. A base plate 105 is attached to the adapter 103, for example using metal screws. Screws and bolts can be secured by an adhesive such as superglue to prevent the fasteners from becoming loose during operation of the shaker 10. In this exemplary embodiment, the base plate 105 is attached to the rotor blade surface 20S with an adhesive bond 106. The diagram indicates a robust and dense adhesive or cement bond 106 between the electrodynamic exciter 10 and the rotor blade 20.

With a suitably strong magnet 103 and a suitably large excitation current in a chosen frequency range, the inertial shaker 10 can impart large oscillating forces to the rotor blade 20, but favourably without any physical impact. For example, an inertial shaker 10 may have an output force of 20 N or more, and a frequency range up to 3,000 Hz or more.

The diagram indicates a force sensor 10F embedded in the adhesive bond 106. Feedback 100 from the force sensor 10F is used by the excitation unit 11 to adjust the excitation signal 110 to the coil during a measuring.

Although the present invention has been disclosed in the form of preferred embodiments and variations thereon, it will be understood that numerous additional modifications and variations could be made thereto without departing from the scope of the invention. For example, a sufficiently powerful inertial shaker may be arranged centrally in the hub and mounted in such a way to simultaneously apply an oscillating force to all rotor blades (usually three). For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A wind turbine rotor blade monitoring arrangement (1) comprising
- an electrodynamic exciter (10) mounted on the rotor blade (20) ;
- an excitation unit (11) configured to generate an excitation signal (110) for the electrodynamic exciter (10) ;
- a force sensor (10F) configured to measure force imparted to the rotor blade (20) during operation of the electrodynamic exciter (10), which force sensor (10F) is collocated with the electrodynamic exciter (10);
- a vibration sensor (12) arranged on the rotor blade (20) at a distance from the electrodynamic exciter (10); and
- an evaluation unit (13) configured to infer a health status of the rotor blade (20) on the basis of a vibration sensor output (120) and the measured force (100) .

2. A rotor blade monitoring arrangement according to claim 1, wherein the electrodynamic exciter (10) is an inertial shaker.

3. A rotor blade monitoring arrangement according to any of the preceding claims, wherein the output force of the electrodynamic exciter (10) is at least 5 N, more preferably at least 20 N.

4. A rotor blade monitoring arrangement according to any of the preceding claims, wherein the frequency range of the electrodynamic exciter (10) extends to at least 1 kHz, more preferably to at least 3 kHz.

5. A rotor blade monitoring arrangement according to any of the preceding claims, wherein the electrodynamic exciter (10) is attached to the surface (20S) of the rotor blade (20) by an adhesive bond (106).

6. A rotor blade monitoring arrangement according to claim 5, wherein the force sensor (10F) is incorporated in the adhesive bond (106).

7. A rotor blade monitoring arrangement according to any of the preceding claims, wherein the force sensor (10F) is a force transducer.

8. A rotor blade monitoring arrangement according to any of the preceding claims, wherein a vibration sensor (12) is attached to a surface of the rotor blade (20) or at least partially embedded in the body of the rotor blade (20).

9. A rotor blade monitoring arrangement according to any of the preceding claims, comprising a database (14) for storing reference data obtained from a vibration sensor (12).

10. A wind turbine (2) comprising a number of rotor blades (20) mounted to a hub (21), wherein at least one of the rotor blades (20) is equipped with a monitoring arrangement (1) according to any of claims 1 to 9.

11. A wind turbine according to claim 10, wherein the evaluation unit (11) is realised at a remote location, and wherein the wind turbine (2) comprises a means of transmitting a vibration sensor output (120) to the remote evaluation unit (11).

12. A method of monitoring the health status of a wind turbine rotor blade (20), which method comprises the steps of
- arranging an electrodynamic exciter (10) on a surface (20S) of the rotor blade (20);
- arranging a force sensor (10F) in collocation to the electrodynamic exciter (10);
- arranging a vibration sensor (12) at a distance from the electrodynamic exciter (10);
- operating the electrodynamic exciter (10) and using the collocated force sensor (10F) to measure the force imparted to the rotor blade (20); and
- inferring a health status (60 - 66) of the rotor blade (20) on the basis of a vibration sensor output (120) and the measured force (100).

13. A method according to the preceding method claim, further comprising the steps of
- computing an input power spectrum (10P) from the measured force (100);
- computing a far-field power spectrum (12P) from the vibration sensor output (120); and
- computing a frequency response function (12FRF) from the input power spectrum (10P) and the far-field power spectrum (12P).

14. A method according to any of the preceding method claims, wherein a health status (60, ..., 66) of the rotor blade (20) is inferred from a comparison of a frequency response function (12FRF) with a reference frequency response function (12FRF₀).

15. A method according to any of the preceding method claims, wherein an initial calibration to compute a reference frequency response function (12FRF₀) is performed as part of an installation procedure of the rotor blade (20).
